# EUROPÄISCHE PATENTSCHRIFT

(11) **EP 2 612 779 B1**
(45) Veröffentlichungstag und Bekanntmachung des Hinweises auf die Patenterteilung: **25.03.2015**
(21) Anmeldenummer: 12008517.0
(22) Anmeldetag: 21.12.2012
(51) Int. Cl.: B60K 11/08

(54) **Luftklappenanordnung**
Air flap arrangement
Dispositif de volets d'aération

(30) Priorität: 05.01.2012 DE 102012000636
(43) Veröffentlichungstag der Anmeldung: 10.07.2013
(73) Patentinhaber: HBPO GmbH, 59552 Lippstadt (DE)
(72) Erfinder: Schöning, Ralf, 33442 Herzebrock-Clarholz (DE)
(74) Vertreter: Schober, Mirko

(56) Entgegenhaltungen:
- WO-A1-2012/160065
- DE-A1-102010 002 373

## Beschreibung

Die Erfindung betrifft eine Luftklappenanordnung nach dem Oberbegriff des Anspruchs 1.

Für die Luftklappen im Kühlerbereich eines Fahrzeugs ist es bekannt, diese dem Winkel nach verstellbar auszubilden. Dazu wird in der Regel ein Aktuator eingesetzt, der die Verstellung der Luftklappen bewirkt. Bei der Herstellung der Luftklappenanordnung muss der Aktuator mit dem die Luftklappen aufnehmenden Rahmen einerseits und mit seiner Antriebswelle mit den Luftklappen andererseits verbunden werden.

In der Regel muss daher der Aktuator mit dem Rahmen verschraubt werden, damit er auch gegen ein Herausdrehen aus dem Rahmen - aufgrund der betriebsbedingten, auf den Aktuator wirkenden Drehmomente - im Betrieb gesichert ist.

Aus der gattungsbildenden DE 10 2010 002373 A1 ist eine solche verstellbare Luftklappenanordnung für Fahrzeugfrontends bekannt. Diese umfasst eine Trägerstruktur in Form eines Rahmens. Zwischen Seitenwänden des Rahmens sind einzelne Luftklappen in der Art einer Jalousie angeordnet. Mittels einer Antriebsvorrichtung lassen sich die einzelnen Luftklappen gleichzeitig um ihre jeweilige Längsachse herum verschwenken. Hierzu ist die Antriebsvorrichtung in geeigneter Weise mit den Luftklappen gekoppelt. Die Luftklappenanordnung weist ferner eine zentrale Antriebsaufnahme auf, welche zur Anbringung und Aufnahme eines Motors der Antriebsvorrichtung vorgesehen ist. Zur Anbringung der Antriebsaufnahme wird diese zumindest teilweise durch eine Klammer umgriffen. Die Klammer selbst weist an ihrem der Antriebsaufnahme zugewandten Ende einzelne Clipselemente auf, mit welchen die Klammer in eine Öffnung des Rahmens eingeclipst ist.

Der Erfindung liegt die Aufgabe zugrunde, den zur Anbringung des Aktuators am Rahmen erforderlichen Montageaufwand so gering wie möglich zu halten und gleichzeitig die Anzahl der hierfür erforderlichen Bauteile zu reduzieren.

Gelöst wird diese Aufgabe durch eine Luftklappenanordnung mit den Merkmalen des Anspruchs 1. Vorteilhafte Ausführungsformen finden sich in den Unteransprüchen.

Bei der erfindungsgemäßen Luftklappenanordnung ist ein Tragrahmen zur Aufnahme einer Mehrzahl Luftklappen sowie ein mit den Luftklappen gekoppelter Aktuator zur Betätigung der Luftklappen vorgesehen. Der Aktuator ist in oder an einer Aufnahme im Bereich der Luftklappenanordnung angebracht. Dies geschieht über eine am Aktuator vorgesehene Kopplungseinrichtung. Diese ist mit einem Befestigungselement gekoppelt, welches einen Fixierabschnitt aufweist, mit welchem das Befestigungselement in der Aufnahme ohne zusätzliches Verbindungselement fixiert ist.

Die Kopplung zwischen Befestigungselement und Aktuator ist dabei in einem von der Antriebsachse des Aktuators entfernt liegenden Bereich des Aktuators vorgesehen. Treibt der Aktuator Luftklappen an, so wird auf den Aktuator über die mit den Luftklappen gekoppelte Antriebsachse ein Drehmoment ausgeübt. Dieses Drehmoment würde dafür sorgen, dass der Aktuator sich um die Antriebsachse drehen und aus der Aufnahme herausdrehen würde. Dieses Drehmoment ist an dem am Weitesten von der Antriebsachse entfernten Punkt am größten, so dass zur Kompensierung an dieser Stelle bevorzugt die Kopplung des Aktuators mit dem Befestigungselement erfolgen sollte, damit das Drehmoment durch das Befestigungselement kompensiert werden kann und ein Herausdrehen des Aktuators vermieden wird.

Das Befestigungselement weist einen, insbesondere wenigstens abschnittweise in einer Richtung parallel zur Antriebsachse des Aktuators sich erstreckenden, Eingriffszapfen auf, der in der Kopplungseinrichtung aufgenommen ist. Der Eingriffszapfen kann in die als Loch oder Langloch, bevorzugt als Schlaufe oder Öse ausgebildete Kopplungseinrichtung des Aktuators eingeschoben werden. Sodann werden Aktuator und Befestigungselement in die Aufnahme eingesetzt und dort wie oben beschrieben fixiert.

Durch das erfindungsgemäße Befestigungselement wird der Aktuator an der Aufnahme des Tragrahmens fixiert. Es sind keine zusätzlichen Verbindungselemente wie Schrauben oder dergleichen erforderlich. Bevorzugt ist dabei vorgesehen, dass der Fixierabschnitt ein Rastelement aufweist, welches in einer Rastaufnahme der Aufnahme eingerastet ist. Durch die Rastverbindung ist eine schnelle und damit kostengünstige Montage möglich.

Das Befestigungselement ist bevorzugt etwa J- oder L-förmig ausgebildet. Das eine Ende des Befestigungselements weist dabei das Rastelement und dessen anderes Ende den Eingriffszapfen auf. Zusätzlich können in der Aufnahme Versteifungsrippen vorgesehen sein, an denen der Aktuator anliegt. Damit kann sich der Aktuator dort abstützen und auch beim Betrieb die auf ihn wirkenden Kräfte in den Halterahmen einleiten. Bevorzugt liegen die Versteifungsrippen dazu an wenigstens zwei gegenüberliegenden Seiten des Aktuators an.

Die Erfindung wird nachfolgend anhand der Zeichnungen in den Figuren 1 bis 4 näher erläutert.
Figur 1 zeigt eine erfindungsgemäße Luftklappenanordnung in perspektivischer Darstellung.
Figur 2 zeigt eine perspektivische Detailansicht der Aufnahme für den Aktuator.
Figur 3 zeigt ein erfindungsgemäßes Befestigungselement.
Figur 4 zeigt die Aufnahme mit eingesetztem Aktuator.

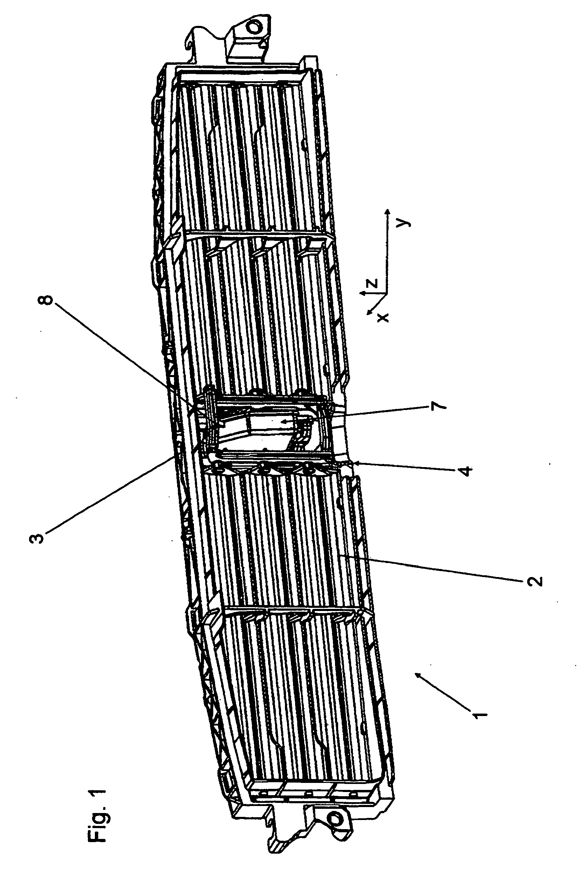

Die in Figur 1 gezeigte Luftklappenanordnung weist einen Tragrahmen 1 auf, der sich im Wesentlichen in einer Fahrzeugquerrichtung Y und in einer Vertikalrichtung Z zwischen einer Unterseite 4 und einer Oberseite 3 erstreckt. Zwischen Unterseite 4 und Oberseite 3 sind Luftklappen 2 angeordnet, die am Tragrahmen 1 schwenkbar um Schwenkachsen parallel zur Fahrzeugquerrichtung Y gelagert sind. Die Fahrtrichtung ist mit X bezeichnet. Die Luftklappen 2 lassen sich über einen Aktuator 7 verschwenken. Der Aktuator 7 ist bevorzugt mit einer der Luftklappen 2 direkt gekoppelt. Die Luftklappen 2 untereinander können dann durch ein Kopplungselement 8 miteinander gekoppelt sein, so dass der Aktuator 7 alle Luftklappen synchron miteinander verschwenken kann.

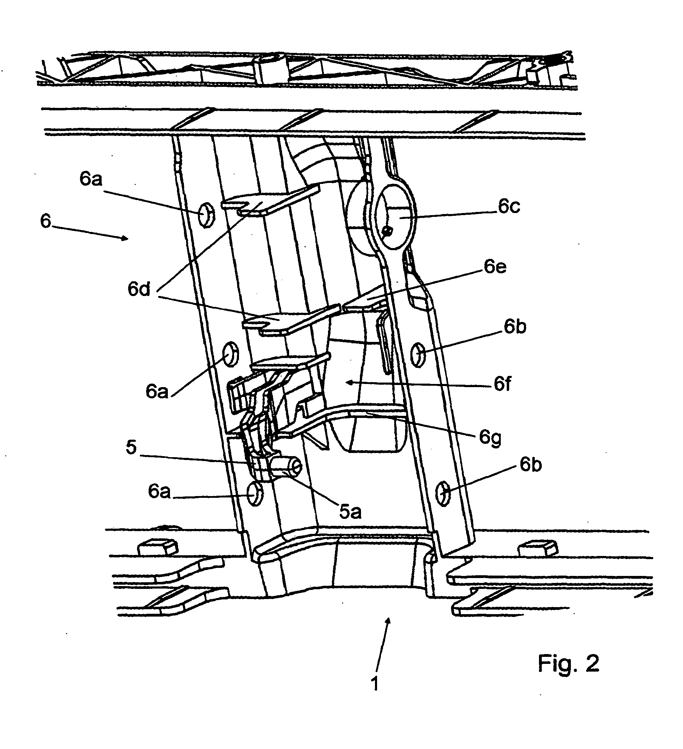

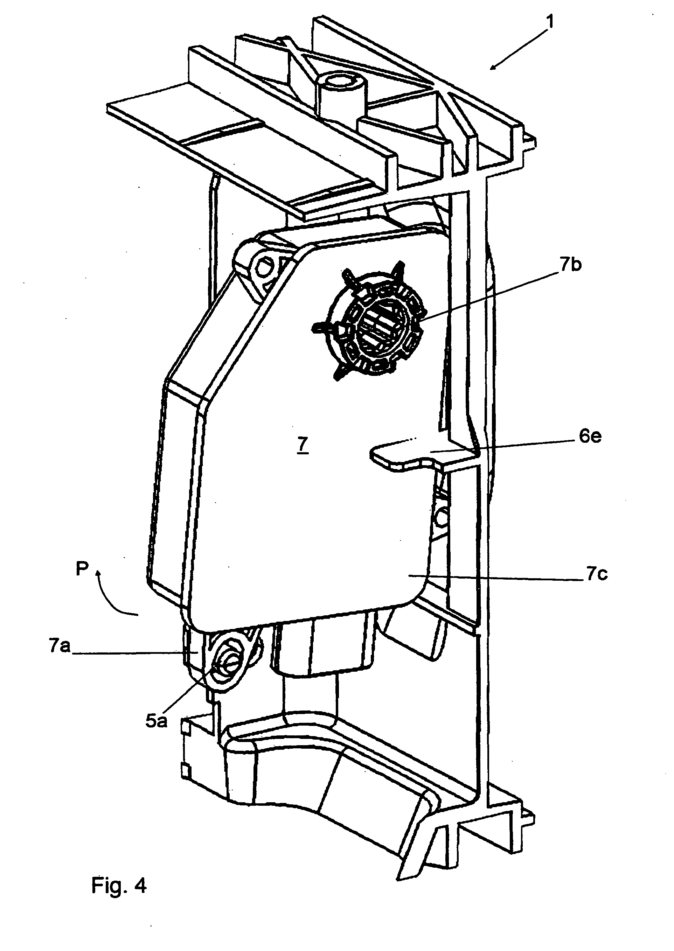

Zur Befestigung des Aktuators 7 dient eine Aufnahme 6, wie sie in den Figuren 2 und 4 gezeigt ist. Die Aufnahme 6 ist im gezeigten Beispiel als Vertiefung im Tragrahmen ausgebildet und weist Versteifungsrippen 6d, 6e, 6g auf. Die Öffnungen oder Bohrungen 6a, 6b dienen zur Lagerung der Luftklappen (nicht gezeigt). Die Öffnung 6c dient zur Aufnahme bzw. Durchführung der Antriebsachse (in Figur 4 durch 7b angedeutet) des Aktuators 7, an der wiederum ein Ende einer Luftklappe 2 gelagert wird. Die Versteifungsrippen 6d, 6e, 6g, die sich im gezeigten Beispiel im Wesentlichen parallel zur X-Y-Ebene erstrecken, dienen einerseits der Versteifung im Bereich der Aufnahme 6 und anderseits der Abstützung und Anlage des Aktuators 7, wobei die Versteifungsrippen 6d auf der einen Seite des Aktuators 7 und die Versteifungsrippe 6e auf der gegenüberliegenden Seite des Aktuators 7 anliegen. Die Versteifungsrippen 6d und 6e sind bevorzugt in vertikaler Richtung Z zueinander versetzt. Die Versteifungsrippe 6g erstreckt sich wenigstens zum Teil hinter dem Aktuator 7 und bildet einen rückwärtigen Anschlag für diesen.

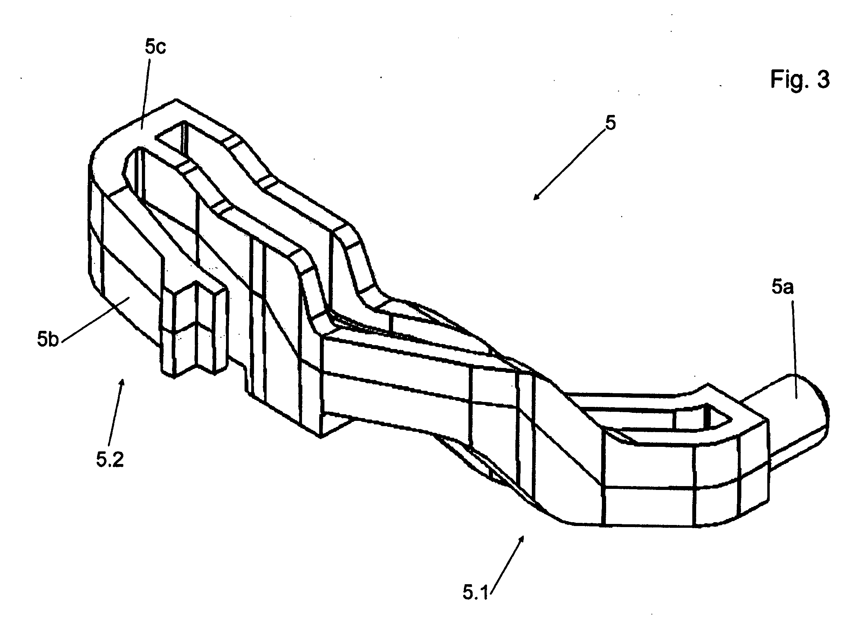

Die Aufnahme 6 weist eine Rastaufnahme 6f auf, in die ein gewindeloses Befestigungselement 5 eingerastet ist. Dieses Befestigungselement 5, welches im Detail in Figur 3 gezeigt ist, weist eine grob J- oder L-förmige Gestalt auf, wobei bevorzugt der jeweils längere Schenkel oder Abschnitt 5.2 der L- oder J-Form als Fixierabschnitt zur Fixierung des Befestigungselements 5 in der Rastaufnahme 6f vorgesehen ist. Am dem in die Rastaufnahme 6f eingerasteten Ende 5c weist das Befestigungselement 5 eine als Rastelement dienende Rastklinke 5b auf. Bevorzugt weist der kürzere oder gebogene Schenkel oder Abschnitt 5.1 des Befestigungselements 5 an seinem freien Ende einen Eingriffszapfen 5a auf, dessen Längsachse sich im gezeigten Beispiel in Richtung Y parallel zur der Fahrzeugquerachse bzw. der Schwenkachse der Luftklappen erstreckt. Dieser Zapfen 5a greift, wie in Figur 4 gezeigt, in eine als Loch oder Langloch ausgebildete Kopplungseinrichtung 7a am Aktuator 7 ein. Der Zapfen 5a hat in dieser Kopplungseinrichtung 7a bevorzugt etwas Spiel, um die Montage zu erleichtern. Bevorzugt ist das sich insbesondere in Fahrzeugquerrichtung Y bzw. derselben Richtung wie der Zapfen 5a erstreckende Loch 7a möglichst weit von der Antriebsachse 7b des Aktuators 7 entfernt. Sinn dieser Kopplung ist, dass beim Betrieb des Aktuators 7, also der Betätigung der Antriebsachse 7b der Aktuator 7 um diese Antriebsachse 7b verschwenkt wird. Bei der einen Drehrichtung wird diese unerwünschte Bewegung durch Anschlagen des Aktuators 7 in dessen unteren Bereich 7c gegen Teile der Aufnahme 6 kompensiert. Bei umgekehrter Drehrichtung würde sich der Aktuator jedoch in Richtung des Pfeils P aus der Aufnahme 6 heraus drehen. Durch Zusammenwirken mit dem Befestigungselement 5, insbesondere Eingriff des Zapfens 5a in das Loch 7a, wird eine Schwenkbewegung des Aktuators 7 in Richtung des Pfeils P blockiert oder unterdrückt. Das Befestigungselement 5, welches in die Aufnahme 6 eingeclipst ist, dient also nicht nur der schraubenlosen Montage, sondern verhindert auch wirksam eine Fehlfunktion durch Verschwenken des Aktuators 7.

## Patentansprüche

1. Luftklappenanordnung für Fahrzeugfrontends, aufweisend einen Tragrahmen (1) zur Aufnahme einer Mehrzahl Luftklappen (2), sowie einen mit den Luftklappen (2) gekoppelten Aktuator (7) zur Betätigung der Luftklappen (2), wobei weiter eine Aufnahme (6) zur Aufnahme und Anbringung des Aktuators (7) im Bereich der Luftklappenanordnung vorgesehen ist, wobei der Aktuator (7) eine Kopplungseinrichtung (7a) zur Kopplung mit einem Befestigungselement (5) besitzt und das Befestigungselement (5) einen Fixierabschnitt (5.2) aufweist, mit dem es in der Aufnahme (6) ohne zusätzliches Verbindungselement fixiert ist,
**dadurch gekennzeichnet**,
dass Befestigungselement (5) und Aktuator (7) in einem von der Antriebsachse des Aktuators (7) entfernt liegenden Bereich des Aktuators (7) gekoppelt sind, wobei das Befestigungselement (5) einen, insbesondere wenigstens abschnittweise in einer Richtung (Y) parallel zur Antriebsachse des Aktuators (7) sich erstreckenden, Eingriffszapfen (5a) aufweist, der in der als Loch oder Langloch ausgebildeten Kopplungseinrichtung (7a) aufgenommen ist.

2. Luftklappenanordnung nach Anspruch 1,
**dadurch gekennzeichnet**,
dass der Fixierabschnitt (5.2) ein Rastelement (5b) aufweist, welches in einer Rastaufnahme (6f) der Aufnahme (6) eingerastet ist.

3. Luftklappenanordnung nach einem der vorigen Ansprüche,
**dadurch gekennzeichnet**,
dass das Befestigungselement (5) etwa J- oder L-förmig ausgebildet ist, wobei dessen eines Ende (5c) ein Rastelement (5b) und dessen anderes Ende den Eingriffszapfen (5a) aufweist.

4. Luftklappenanordnung nach einem der vorigen Ansprüche,
**dadurch gekennzeichnet**,
**dass** die Aufnahme (6) Versteifungsrippen (6d, 6e, 6g) aufweist, an denen der Aktuator anliegt.

5. Luftklappenanordnung nach Anspruch 5,
**dadurch gekennzeichnet**,
**dass** die Versteifungsrippen an wenigstens zwei gegenüberliegenden Seiten des Aktuators (7) anliegen.

6. Luftklappenanordnung nach einem der vorigen Ansprüche,
**dadurch gekennzeichnet**,
**dass** das Befestigungselement (5) so angeordnet und mit dem Aktuator (7) und der Aufnahme (6) gekoppelt ist, dass ein beim Betrieb auf den Aktuator (7) wirkendes Drehmoment durch das Befestigungselement (5) kompensiert wird.

## Claims

1. Air flap arrangement for vehicle front ends, comprising a support frame (1) for receiving a plurality of air flaps (2), as well as an actuator (7) coupled to the air flaps (2) for actuating the air flaps (2), wherein furthermore a locator (6) is provided for receiving and attaching the actuator (7) in the region of the air flap arrangement, wherein the actuator (7) has a coupling device (7a) for coupling to a fixing element (5), and the fixing element (5) has a fixing portion (5.2) with which it is fixed in the locator (6) without additional connecting elements, **characterised in that** the fixing element (5) and actuator (7) are coupled in a region of the actuator (7) lying remote from the drive axis of the actuator (7), wherein the fixing element (5) has an engagement pivot (7a) which extends more particularly at least in portions in a direction (Y) parallel to the drive axis of the actuator (7) and is received in the coupling device (7a) which is formed as a hole or oblong hole.

2. Air flap arrangement according to claim 1 **characterised in that** the fixing portion (5.2) has a detent element (5b) which is snap-fitted in a detent socket (6f) of the locator (6).

3. Air flap arrangement according to one of the preceding claims **characterised in that** the fixing element (5) is formed approximately J-or L-shaped wherein its one end (5c) has a detent element (5b) and its other end has the engagement pivot (5a).

4. Air flap arrangement according to one of the preceding claims **characterised in that** the locator (6) has reinforcement ribs (6d, 6e, 6g) against which the actuator rests.

5. Air flap arrangement according to claim 5 **characterised in that** the reinforcement ribs rest against at least two opposite sides of the actuator (7).

6. Air flap arrangement according to one of the preceding claims **characterised in that** the fixing element (5) is arranged and coupled to the actuator (7) and the locator (6) so that torque acting on the actuator (7) during operation is compensated by the fixing element (5).

## Revendications

1. Agencement de volets d'air pour une extrémité frontale de véhicule automobile présentant un cadre de support (1), qui est destiné à recevoir une pluralité de volets d'air (2), ainsi qu'un actuateur (7), qui est couplé avec les volets d'air (2) pour l'actionnement desdits volets d'air (2), sachant que, de plus, un réceptacle (6) est prévu dans la région de l'agencement de volets d'air pour la réception et le logement de l'actuateur (7), ledit actuateur (7) étant doté d'un dispositif de couplage (7a) pour le raccordement d'un élément de fixation (5) et ledit élément de fixation (5) présentant une section de fixation (5.2) au moyen de laquelle il est fixé dans le réceptacle (6) sans élément de liaison supplémentaire,
**caractérisé en ce que**
l'élément de fixation (5) et l'actuateur (7) sont couplés dans une région de l'actuateur (7) éloignée de l'axe d'entraînement de l'actuateur (7), sachant que l'élément de fixation (5) présente un organe d'attaque (5a) qui est logé dans le dispositif de couplage (7a) réalisé en forme d'orifice ou de trou oblong.

2. Agencement de volets d'air selon la revendication 1,
**caractérisé en ce que**
la section de fixation (5.2) présente un élément de blocage (5b) qui est enclenché dans une encoche (6f) du réceptacle (6).

3. Agencement de volets d'air selon l'une des revendications précédentes,
**caractérisé en ce que**
l'élément de fixation (5) présente approximativement la forme d'un J ou d'un L, sachant que l'une de ses extrémités (5c) est dotée d'un élément de blocage (5b) et que son autre extrémité présente l'organe d'attaque (5a).

4. Agencement de volet d'air selon l'une des revendications précédentes,
**caractérisé en ce que**
le réceptacle (6) présente des nervures de raidissement (6d, 6 e, 6g) contre lesquelles porte l'actuateur.

5. Agencement de volet d'air selon la revendication 4,
**caractérisé en ce que**
les nervures de raidissement portent contre au moins deux faces de l'actuateur (7) opposées.

6. Agencement de volet d'air selon l'une des revendications précédentes,
**caractérisé en ce que**
l'élément de fixation (5) est disposé et couplé avec l'actuateur (7) et le réceptacle (6) de telle manière qu'un couple de rotation, qui agit sur ledit actuateur (7) pendant le fonctionnement, soit compensé par l'élément de fixation (5).
